# EUROPÄISCHE PATENTSCHRIFT

(11) **EP 2 558 927 B1**
(45) Veröffentlichungstag und Bekanntmachung des Hinweises auf die Patenterteilung: **15.06.2022**
(21) Anmeldenummer: 11743963.8
(22) Anmeldetag: 18.04.2011
(51) Int. Cl.: G06F 3/044

(54) **TFT-LC DISPLAY SOWIE VERFAHREN ZUR DETEKTION DER RÄUMLICHEN POSITION VON GLIEDMASSEN IN DEM EINEM DISPLAY VORGELAGERTEN RÄUMLICHEN BEREICH**
TFT LC DISPLAY AND METHOD FOR DETECTING THE SPATIAL POSITION OF LIMBS IN A SPATIAL REGION DISPOSED IN FRONT OF A DISPLAY
ÉCRAN TFT LC ET PROCÉDÉ POUR DÉTECTER LA POSITION SPATIALE DE MEMBRES DANS UNE ZONE SPATIALE SITUÉE DEVANT UN ÉCRAN

(30) Priorität: 01.04.2011 DE 102011015806; 16.04.2010 DE 102010015524
(43) Veröffentlichungstag der Anmeldung: 20.02.2013
(73) Patentinhaber: Microchip Technology Germany GmbH, 85737 Ismaning (DE)
(72) Erfinder: IVANOV, Artem, 82205 Gilching (DE)
(74) Vertreter: sgb europe
(86) Internationale Anmeldenummer: PCT/EP2011/001962
(87) Internationale Veröffentlichungsnummer: WO 2011/128116

(56) Entgegenhaltungen:
- WO-A1-2005/036510
- US-A- 5 043 710
- US-A1- 2009 096 760
- US-A1- 2010 066 650

## Beschreibung

Die Erfindung bezieht sich auf ein TFT-Flüssigkristalldisplay das als solches der Wiedergabe von Bildinhalten dient, die durch ein digitales Rechnersystem generiert werden, wobei im Bereich dieses Displays eine Eingabeeinrichtung vorgesehen ist die es ermöglicht, unter Nutzung feldelektrischer Wechselwirkungseffekte Eingabeoperationen auf berührungslosem Wege durch gestenartige Interaktion vorzunehmen.

Ein TFT-LC-Display mit separatem touch panel ist aus der US Offenlegungsschrift US 2009/0096760 bekannt. US-Patent 5,043,710 beschreibt einen Berührungssensor der mittels einer Flüssigkristallzelle gebildet wird und konfiguriert ist eine mechanische Krafteinwirkung auf die Flüssigkristallzelle zu detektieren.

Aus der auf die Anmelderin zurückgehenden WO 2008/116642 A2 ist ein Mobiltelefon bekannt, das ein Display zur Visualisierung einer Benutzeroberfläche aufweist, wobei dieses Mobiltelefon mit einer Elektrodenanordnung ausgestattet ist durch welche die Position eines Fingers eines Anwenders in einem dem Display räumlich vorgelagerten Bereich erfasst werden kann. Die Elektrodenanordnung umfasst mehrere Messelektroden, wobei über diese Messelektroden Spannungen detektierbar sind, deren Pegel eng mit der räumlichen Position des Fingers gegenüber dem Mobiltelefon korrelieren. Über diese Spannungspegel kann auf Grundlage eines Triangulationsansatzes oder Trilaterationsansatzes die Position des Fingers berechnet werden. Anhand der fortlaufend ermittelten Positionen des Fingers kann eine Cursor- oder Menuesteuerung und damit insgesamt eine Funktionssteuerung des Mobiltelefons abgewickelt werden.

Der Erfindung liegt die Aufgabe zugrunde, Lösungen zu schaffen durch welche es möglich wird, bei Geräten die als solche mit einem Display ausgestattet sind, in besonders vorteilhafter Weise eine Eingabeschnittstelle für Eingabeoperationen zu realisieren, wobei jene Eingabeoperationen in Form von Finger- oder Handbewegungen in einem dem Display vorgelagerten Bereich berührungslos abgewickelt werden. Diese und andere Aufgaben werden durch das TFT LC-Display und das Verfahren gemäß der unabhängigen Ansprüche 1 und 6 gelöst. Weitere Ausgestaltungen sind den abhängigen Ansprüchen zu entnehmen. Ein LC-Display weist auf: eine Polarisationsschicht, eine erste Substratschicht, eine erste Elektrodenstruktur die eine Vielzahl von Pixelelektroden umfasst und auf die erste Substratschicht aufgebracht ist, eine Flüssigkristallschicht, und eine zweite Elektrodenstruktur die als vollflächige transparente Elektrodenlage (VCOM) ausgeführt ist und als Gegenelektrode zu der Vielzahl der Pixelelektroden fungiert. Das LC- Display ist mit einer Sensoreinrichtung ausgestattet, welche zur Detektion des Fingers oder der Hand eines Anwenders in einem dem LC-Display vorgelagerten Bereich dient, wobei die vorgenannte zweite Elektrodenstruktur als Feldbereitungselektrode dieser Sensoreinrichtung fungiert. Durch das erfindungsgemäße Konzept wird unter Einschluss des TFT-LC-Displays eine Sensorschaltung geschaffen die eine Erfassung von Objektpositionen vor einem TFT-LC-Display auf kapazitivem Wege ermöglicht. Das erfindungsgemäße Konzept eignet sich insbesondere für eine gestenbasierte Steuerung von Geräten die ein TFT-LC-Display umfassen, wie z.B. Computern, Verkaufsautomaten, Mobiltelefonen und dgl. und ermöglicht es, die Position der Hand oder des Fingers des Nutzers vor jenem Display zu erfassen, indem eine transparente Elektrode des TFT-LC-Displays direkt als Feldbereitungselektrode genutzt wird. Durch das erfindungsgemäße Konzept wird das bislang bestehende Problem gelöst, dass durch die Komponenten des LC-Displays die Ausbreitung des Messfeldes beeinträchtigt und damit die Positionserfassung der Finger auf feldelektrischem Wege behindert wird. In weiterhin vorteilhafter Weise wird durch das erfindungsgemäße Konzept vermieden, dass durch den eigentlichen Betrieb des Displays das bislang durch separate Feldbereitungselektroden generierte Feld gestört wird. Durch das erfindungsgemäße Konzept wird es möglich die ohnehin im TFT-LC-Display vorhandene Elektrode für das Positionserfassungssystem zu nutzen.

Durch das erfindungsgemäße Konzept wird es möglich, ein unmittelbar in ein TFT- LC-Display integriertes Gestensensorsystem zu schaffen, das eine gute Reichweite aufweist. Die zur Realisierung des erfindungsgemäßen Sensorsystems vorgesehene Elektronik kann in vorteilhafter Weise in einen Grafikcontrollerchip implementiert werden. Dieser Grafikcontrollerchip umfasst dann vorzugsweise mehrere, beispielsweise vier Eingänge zum Anschluss von Messelektroden. Die Verbindung der Messelektroden mit den Eingängen des Grafikkontrollerchips erfolgt vorzugsweise durch abgeschirmte Messleitungen. Der Grafikkontrollerchip kann so gestaltet sein, dass dessen Signalverarbeitungsverhalten signaltechnisch abgestimmt werden kann. Die abgeschirmten Leitungen müssen nicht als diskret abgeschirmte Kabel ausgeführt sein. Sie können z.B. auch in eine ggf. lediglich einlagige Leiterplatte oder Folienleiterplatte eingearbeitet sein.

Vorzugsweise ist die Sensoreinrichtung zumindest teilweise schaltungstechnisch in eine Displaybetriebsschaltung eingebunden. Die Sensoreinrichtung kann so ausgeführt sein, dass diese wenigstens eine Randelektrode umfasst, die in einem der zweiten Elektrodenstruktur benachbarten Randbereich angeordnet ist. Die Sensoreinrichtung kann auch mehrere Randelektroden umfassen. Durch diese Maßnahme wird es möglich, anhand der von den einzelnen Messelektroden abgegriffenen Signalen eine Positionsbestimmung des Fingers, oder der Hand eines Anwenders durch einen Triangulationsansatz vorzunehmen. Vorzugsweise ist die Displayeinrichtung als Rechteckdisplay ausgebildet. Das Sensorsystem umfasst vorzugsweise mehrere Randelektroden die sich im Rand- und/oder Eckbereich des Rechteckdisplays befinden. Die zweite Elektrodenstruktur (VCOM) wird vorzugsweise mit einer Rechteckspannung beaufschlagt. Die Frequenz der Rechteckspannung liegt vorzugsweise im Bereich von 50 Hz bis 80 kHz. Die zweite Elektrodenstruktur kann ggf. in verschiede Segmente unterteilt sein. Die zweite Elektrodenstruktur kann weiterhin auch eine funktionelle Elektrode eines Berührungssensorsystems bilden.

Das Konzept kann so umgesetzt werden dass die durch die Display-Controllerschaltung an die Common-Elektrode angelegte Spannung direkt der Feldgenerierung dient.

Die nachfolgend beschriebenen OLED Strukturen sind nicht Bestandteil der vorliegenden Erfindung und dienen lediglich dem besseren Verständnis der Erfindung. Bislang als Beleuchtungsmittel eingesetzte OLEDs sind typischerweise aus mehreren organischen Schichten aufgebaut. Dabei wird meist auf die Anode, bestehend aus Indium-Zinn-Oxid (ITO), die sich auf einer Glasscheibe befindet, eine Lochleitungsschicht (engl, hole transport layer, HTL) aufgebracht. Zwischen ITO und HTL wird abhängig von der Herstellungsmethode oft noch eine Schicht aus PEDOT/PSS (Poly(3,4-ethylendioxythiophen)/Polystyrolsulfonat) aufgebracht, die zur Absenkung der Injektionsbarriere für Löcher dient und die Eindiffusion von Indium in den Übergang verhindert. Auf die HTL wird eine Schicht aufgebracht, die entweder einen Farbstoff enthält (ca. 5-10 %) oder - selten - vollständig aus dem Farbstoff (z. B. Aluminium-tris(8-hydroxychinolin), Alq3) besteht. Diese Schicht bezeichnet man als Emitterschicht (engl, emitter layer, EL). Auf diese wird dann eine Elektronenleitungsschicht (engl, electron transport layer, ETL) aufgebracht. Zum Abschluss wird eine Kathode, bestehend aus einem Metall oder einer Legierung mit geringer Elektronenaustrittsarbeit wie zum Beispiel Calcium, Aluminium, Barium, Ruthenium, Magnesium-Silber-Legierung, im Hochvakuum aufgedampft. Als Schutzschicht und zur Verringerung der Injektionsbarriere für Elektronen wird zwischen Kathode und ETL meistens eine sehr dünne Schicht aus Lithiumfluorid, Cäsiumfluorid oder Silber aufgedampft. Die Elektronen (= negative Ladung) werden nun von der Kathode injiziert, während die Anode die Löcher (= positive Ladung) bereitstellt. Loch und Elektron driften aufeinander zu und treffen sich im Idealfall in der EL, weshalb diese Schicht auch Rekombinationsschicht genannt wird. Elektronen und Löcher bilden einen gebundenen Zustand, der als Exziton bezeichnet wird. Abhängig vom Mechanismus stellt das Exziton bereits den angeregten Zustand des Farbstoffmoleküls dar, oder der Zerfall des Exzitons stellt die Energie zur Anregung des Farbstoffmoleküls zur Verfügung. Dieser Farbstoff hat verschiedene Anregungszustände. Der angeregte Zustand kann in den Grundzustand übergehen und dabei ein Photon (Lichtteilchen) aussenden. Die Farbe des ausgesendeten Lichts hängt vom Energieabstand zwischen angeregtem und Grundzustand ab und kann durch Variation der Farbstoffmoleküle gezielt verändert werden. Ein Problem stellen bislang nichtstrahlende Triplett-Zustände dar. Diese können durch Zugabe von sogenannten Exzitoren wieder gelöst werden. Für die aus Polymeren gefertigten organischen LEDs hat sich die Abkürzung PLED (engl, polymer light emitting diode) durchgesetzt. Als SOLED oder SMOLED werden seltener die aus "small molecules" (kleinen Molekülen) hergestellten OLEDs bezeichnet. In PLEDs werden als Farbstoffe häufig Derivate von Poly(p-Phenylen-Vinylen) (PPV) verwendet. In jüngster Zeit werden Farbstoffmoleküle eingesetzt, die eine vierfach höhere Effizienz als mit den oben beschriebenen fluoreszierenden Molekülen erwarten lassen. Bei diesen effizienteren OLEDs werden metallorganische Komplexe verwendet, bei denen die Lichtaussendung aus Triplett-Zuständen erfolgt (Phosphoreszenz). Diese Moleküle werden auch Triplett-Emitter genannt; der Farbstoff kann übrigens auch durch Licht angeregt werden, was zur Lumineszenz führen kann. Ziel ist es derzeit, selbstleuchtende Bildschirme herzustellen, die die organische Elektrolumineszenz nutzen. Ein Vorteil von OLED-Bildschirmen gegenüber den herkömmlichen Flüssigkristallbildschirmen ist der sehr hohe Kontrast, da sie ohne Hintergrundbeleuchtung auskommen: Während LCDs nur als farbige Filter wirken, emittieren OLEDs farbiges Licht. Dieses Verfahren ist deutlich effizienter, wodurch OLEDs weniger Energie benötigen. Aus diesem Grund werden OLED-TV-Geräte weniger warm als LC-Bildschirme, bei denen ein Grossteil der für die Hintergrundbeleuchtung benötigten Energie in Wärme umgesetzt wird. Durch den geringen Energiebedarf können OLEDs gut in kleinen, tragbaren Geräten eingesetzt werden, beispielsweise Notebooks, Handys und MP3-Playern. Auf Grund der nicht benötigten Hintergrundbeleuchtung ist es möglich, OLEDs sehr dünn zu gestalten. OLED-Bildschirme und OLED-TV-Geräte schneiden aufgrund des geringeren Volumens sowie des deutlich geringeren Gewichts auch im Bereich Transportkosten deutlich besser als aktuelle LCD- und Plasma-Geräte ab. Aus einer Veröffentlichung des Fraunhoferinstituts ist ferner bekannt, ein OLED- Scheibenelement so zu gestalten, dass dieses durch Berührung an und ausgeschaltet werden kann.

Die OLED-Struktur kann in Verbindung mit einer LCD- oder TFT-Struktur eine Displayeinrichtung bilden. Es ist möglich, eine der Elektrodenschichten der OLED- Strukktur - vorzugsweise die Anoden-Elektrodenschicht - als VCOM-Elektrode der LCD- oder TFT-Struktur zu verwenden.

Gemäß einem besonderen Aspekt ist die Anoden-Elektrodenschicht, die Kathoden-Elektrodenschicht, in eine in eine Vielzahl von Elektrodensegmenten derart untergliedert dass diese Elektrodensegmente hierbei ein Segmentarray bilden das Segmentzeilen und Segmentspalten umfasst. Die Auswertungsschaltung ist mit den Elektrodensegmenten gekoppelt und derart ausgebildet, dass diese einen Schaltungszustand einnehmen kann, in welchem über die Elektrodensegmente der Elektrodenschicht eine Positionserfassung bei Berührung abgewickelt wird.

Die Auswertungsschaltung kann weiterhin so ausgebildet sein, dass über diese ein Teil jener Elektrodensegmente die zur Detektion der Position des Fingers des Anwenders im Berührungsmodus herangezogen werden, auch zur Detektion im Nicht-Berührungsmodus herangezogen werden, wobei die berührungslose Positions- oder Bewegungserfassung erfolgt, indem mehrere Elektrodensegmente des Segmentarrays zu einer Elektrodengruppe zusammengefasst sind.

Dadurch wird es auf vorteilhafte Weise möglich, in Verbindung mit der OLED- Struktur eine Displayeinrichtung zu realisieren, wobei wenigstens ein Teil der Elektroden der OLED-Struktur zur Realisierung eines Sensorsystems herangezogen wird das einer Erfassung der räumlichen Positionen oder Bewegungen der Hand oder des Fingers eines Anwenders gegenüber der OLED- Struktur dient.

Die Elektrodensegmente können temporär als Elektrodensystem betrieben werden über welches eine Detektion der Position oder Bewegung eines Fingers des Anwenders abgewickelt wird, bevor dieser die OLED-Struktur berührt. Sobald eine Berührung der OLED-Struktur oder einer physischen Komponente einer die OLED-Struktur beinhaltenden Displayoder Leuchteinrichtung erfolgt, kann über unmittelbar benachbarte Elektrodensegmente bzw. benachbarte Elektrodensegmente von einander sich kreuzenden Zeilen und Spalten eine Positionsanalyse im Touch-Modus vorgenommen werden. Die Elektrodengruppe umfasst vorzugsweise Elektrodensegmente die in dem OLED-Interface eine gestreckte Kette bilden. Die zur Detektion der Fingerposition im Non-Touch-Modus herangezogenen Ketten erstrecken sich vorzugsweise relativ nahe entlang des Randbereiches der OLED-Struktur oder der diese umfassenden Displayeinrichtung. Die zur Positions- oder Bewegungserfassung temporär als Sensorelektrodensysteme betriebenen Segmentketten können zueinander verschiedene Ausrichtungen aufweisen, insbesondere zueinander parallel ausgerichtet und voneinander beabstandet sein. In die Positionsbestimmung können auch Auswertungsergebnisse einfließen die auf Detektionsereignissen beruhen welche aus zueinander quer verlaufenden, insbesondere zueinander senkrecht stehenden Elektrodensegmentketten erhoben wurden.

Die Detektion der Position eines Fingers bei Berührung der OLED-Struktur oder einer diese umfassenden Displayeinrichtung kann erfolgen, indem die feldelektrische Koppelung zweier unmittelbar benachbarter Elektrodensegmente erfasst und bewertet wird. Um diese kurze feldelektrische Zusammenkoppelung der benachbarten Elektrodensegmente zu detektieren ist das Segmentarray vorzugsweise so aufgebaut, dass eine erste Teilmenge der Elektrodensegmente zu separaten Segmentzeilen und eine zweite Teilmenge zu wiederum jeweils separaten Segmentspalten zusammengefasst sind. Die Segmentzeilen und die Segmentspalten sind gegeneinander isoliert. Die Verbindungsstege zwischen abfolgenden Elektrodensegmenten der jeweiligen Elektrodensegmentzeile sind gegenüber den Verbindungsstegen der abfolgenden Elektrodensegmente der Segmentspalten isoliert. Die entsprechenden Kreuzungspunkte sind als isolierende Brücken ausgebildet durch welche eine galvanische Verbindung dieser Verbindungsstege in dem Überquerungsabschnitt vermieden wird. Das Elektrodenarray ist vorzugsweise in der Art eines Feldes mit eng benachbarten Rauten, Sechsecken, Polygonen, oder anderweitigen engmaschig benachbarten Parzellen gebildet. Neben einem Elektrodensegment das Bestandteil einer Segmentspalte bildet befindet sich damit in unmittelbarer Nachbarschaft ein Elektrodensegment das Bestandteil einer Segmentzeile bildet. Der Berührungspunkt der OLED-Struktur oder eines diese umfassenden Displays entspricht damit dem Kreuzungspunkt derjenigen Segmentzeile und derjenigen Segmentspalte der die höchste kapazitive Koppelung bewirkt. Im Berührungserfassungsmodus erfolgt somit die Bestimmung der X- und Y- Positionen durch Erfassung der Kreuzungspunkte mit hoher kapazitiver Koppelung. Die Berührungsposition im Touch-Modus kann weiterhin auch erfasst werden, indem ermittelt wird, welche Segmentzeile und welche Segmentspalte die höchste kapazitive Koppelung mit dem Finger des Anwenders haben. Die Berührposition entspricht dann dem Kreuzungspunkt dieser Segmentzeile mit jener Segmentspalte. Im Non-Touchmodus hingegen erfolgt die Bestimmung der X- und Y- Positionen indem für die kapazitive Koppelung mehrerer Segmentspalten und mehrerer Segmentzeilen entsprechende, positionsabhängige Signalpegel erfasst werden, die indikativ sind für den Abstand des Fingers von der entsprechenden Segmentzeile und der entsprechenden Segmentspalte. Aus diesen Pegelwerten kann dann die Fingerposition errechnet werden, oder zumindest der Bewegungsverlauf des Fingers beschrieben werden. Diese Berechnung erfolgt vorzugsweise unter Abarbeitung mehrerer, vorzugsweise untereinander gewichteter Ansätze, beispielsweise von Triangulations- und Trilaterationsansätzen die auf verschiedene Elektrodensegmentgruppen und Gruppenkombinationen abgestimmt sind. Über die Segmentzeilen und Segmentspalten wird zunächst die kapazitive Koppelung gegen Ground, oder eine anderweitige Spannungseinkoppelung als analoger Pegel ermittelt. Dieser analoge Pegel wird dann über ein ADC-System konvertiert und einer digitalen Datenverarbeitung unterzogen.

Bei einer Ausführungsform erfolgt bei einer im wesentlichen rechteckigen OLED-Struktur oder einer diese umfassenden Displayeinrichtung die Positions- oder Bewegungsbestimmung im NonTouchmodus unter Verwendung der randnahen Segmentzeilen und Segmentspalten. Diese randnahen Segmentzeilen und Segmentspalten bilden dabei einen Elektrodenrahmen. Dieser Elektrodenrahmen ermöglicht es die X- Position des Fingers eines Anwenders durch Auswertung der durch den Finger beeinflussten kapazitiven Koppelung der randnahen Segmentspalten gegen Ground oder gegen ein Potential einer Elektrode der OLED-Struktur zu ermitteln. Die Y-Position des Fingers kann anhand der durch den Finger beeinflussten kapazitiven Koppelung der oberen und der unteren horizontalen Segmentzeile gegen Ground oder gegen ein Potential einer Elektrode der OLED-Struktur ermittelt werden. Das Gegenpotential gegen Ground wird vorzugsweise an die als Anodenelektrode fungierende Elektrodenschicht der OLED-Struktur angelegt die sich im wesentlichen vollflächig auf einer dem Anwender abgewandten Rückseite des Scheibenlayers, d.h. auf der dem Anwender abgewandten Rückseite des Elektrodensegmentarrays erstreckt.

Vorzugsweise wird die Umschaltung zwischen einem ersten Schaltungszustand und einem zweiten Schaltungszustand durch eine Multiplexereinrichtung bewerkstelligt. Diese Multiplexereinrichtung kann als Zeitmultiplexereinrichtung ausgeführt werden die eine bestimmte Zeitphase für den Non-Touch-Modus und eine bestimmte Zeitphase für den Touch-Modus vorsieht. Ggf. können auch programmgesteuert bestimmte Gruppen von Elektrodensegmenten fortlaufend als Elektrodensegmentketten für die Positions- und Bewegungserfassung im NonTouch-Modus herangezogen werden und parallel hierzu bestimmte Elektrodensegmentketten für eine zweidimensionale Positionserfassung im Touchmodus herangezogen werden. Die Benutzeroberfläche ist dann vorzugsweise so gestaltet, dass diese für jene Bereiche deren Elektrodensegmentketten zur Non-Touch-Positionsbestimmung herangezogen werden keine Touchdetektionsfunktion erfordert.

Touch-Detektionsmodus und Non-Touch-Detektionsmodus können durch schaltungstechnische Maßnahmen in zeitlicher Abfolge herbeigeführt werden, oder simultan präsent sein. Bei abfolgender Aktivierung kann anstelle einer starren Festlegung der Zeitdauer des jeweiligen Modus, der Wechsel zwischen dem jeweiligen Modus so abgestimmt werden, dass z.B. der Taktanteil für die Einnahme des zweiten Betriebszustands (des Non-Touch-Modus) auf Null gesetzt, oder reduziert wird, solange eine Berührung detektiert wird. Eine Berührung wird vorzugsweise erkannt, wenn die kapazitive Koppelung einer Elektrodensegmentzeile und einer Elektrodensegmentspalte miteinander, oder jeweils gegen Ground einen bestimmten Grenzwert überschreitet. Durch die Unterdrückung des Non-Touch Analysemodus kann die Signalverarbeitung vereinfacht werden, da die Signalauswertung im Touchmodus mit geringerer Sensibilität und einfacheren Auswertungsoperationen abgewickelt werden kann, als im Non-Touchmodus. Analog hierzu wird in vorteilhafter Weise der Taktanteil für die Einnahme des ersten Betriebszustands reduziert, solange keine Berührung detektiert wird. Da der Berührungsvorgang besonders zuverlässig erkannt werden kann, wird vorzugsweise jedoch selbst dann, wenn z.B. keine ein berührungsindikatives Grenzwertkriterium erfüllende Annäherung erkannt wird in bestimmten, jedoch vorzugsweise relativ großen Zeitabständen eine Berührungsdetektion durchgeführt um hierdurch einen Funktionssicherheitsgewinn zu erreichen.

Der Non-Toch-Modus kann in vorteilhafter Weise in zumindest zwei Sub-Modi untergliedert werden. Der erste Sub-Modus ist ein Large-Distance-Modus. In diesem wird z.B. nur eine Wake-UP-Funktion und eine grobe Erfassung eines Z- Achsen Abstandes (Abstand im wesentlichen senkrecht zum Display) durchgeführt. Erst bei Unterschreiten eines Mindestabstands in Z-Richtung erfolgt die Abarbeitung eines zweiten Sub-Modus. In diesem erfolgt eine sensiblere Positionsbestimmung durch Auswertung der Koppelung der durch die Elektrodensegmente gebildeten Elektrodengruppe gegen Ground oder Auswertung eines in diese Elektrodengruppe eingekoppelten Feldes. Der Grenzabstand bei dessen Unterschreiten eine Erfassung der X-, Y-, und Z- Position erfolgt entspricht beispielsweise einem Abstand bei welchem die randnahen Segmentzeilen und Segmentspalten bereits eine hinreichend genaue Positionsbestimmung ermöglichen. Diese Voraussetzungen sind gemäß experimenteller Untersuchung regelmäßig gegeben, wenn der Abstand des Fingers vom Display kleiner ist als etwa 2/3 der Displaydiagonalen.

Im Rahmen des zweiten Schaltzustandes, können bei Unterschreiten eines Mindestabstands verschiedene Elektrodensegmentgruppen sukzessive aktiviert werden. Die zur Positionserfassung im Non-Touch-Modus herangezogenen Elektrodensegmentzeilen und Elektrodensegmentspalten können damit im Display "wandern" und dabei für die jeweilige Fingerposition optimale Detektionspositionen einnehmen. Es können auch mehrere Elektrodensegmentzeilen und Elektrodensegmentspalten gleichzeitig aktiviert und ausgewertet werden. Die gleichzeitig aktivierten Elektrodensegmentgruppen können dabei voneinander beabstandete Zeilen bzw. Spalten, oder auch zueinander quer verlaufende Zeilen und Spalten sein. Für mittlere Abstände, d.h. Abstände von 25 bis 50% der Displaydiagonalen kann die Fingerposition durch Triangulatation und Trilateration, insbesondere durch Auswertung der analogen Signalpegel der randnahen Segmentzeilen und Segmentspalten ermittelt werden. Bei weiterer Annäherung kann die Fingerposition als Kreuzungspunkt derjenigen Segmentspalte und Segmentzeile mit der höchsten kapazitiven Koppelung gegen Ground, oder anderweitig signifikanten Potentialpegeln, vorzugsweise der OLED-Elektroden ermittelt werden. Der Z-Abstand kann dann aus dem jeweiligen Pegel der kapazitiven Koppelung gegen Ground, bzw. dem Potentialpegel ermittelt werden. Das Kreuzungspunktkonzept und das Trilaterationskonzept können auch miteinander verknüpft, insbesondere gewichtet verknüpft zur Positionsbestimmung herangezogen werden.

Vorzugsweise wird im zweiten Schaltzustand, d.h. dem Non-Touch-Modus eine erste Elektrodengruppe aktiviert, die eine obere randnahe horizontale Segmentkette darstellt und eine zweite Elektrodengruppe aktiviert, die eine untere randnahe horizontale Segmentkette darstellt. Durch diese beiden Elektrodensegmentgruppen kann dann die zwischen diesen horizontalen Grenzen liegende Y-Position des Fingers errechnet werden.

Zur Erfassung der X-Position im zweiten Schaltzustand (Non-Touch-Modus) werden vorzugsweise Elektrodengruppen herangezogen, die eine linke randnahe vertikale Segmentkette und eine rechte randnahe vertikale Segmentkette darstellen.

Weiterhin ist es möglich, sukzessive wechselnde Elektrodengruppen zur Erfassung der Fingerpositionen heranzuziehen, so dass beispielsweise die jeweils ausgewerteten Elektrodensegmentgruppen in der Art einer adaptiv durchgeschalteten, beispielsweise vertikal wandernden Zeile oder horizontal wandernden Spalte über das OLED-Interface, insbesondere OLED- Displayeinrichtung laufen.

Weiterhin können die Pegelwerte von zueinander quer, insbesondere zueinander in etwa senkrecht verlaufenden Elektrodensegmentketten durch entsprechende Auswertungskonzepte ausgewertet werden.

Die Erfassung der X-, Y-, und Z- Informationen erfolgt vorzugsweise indem wie bereits angesprochen im Rahmen des zweiten Schaltzustandes (Non-TouchModus) Elektrodengruppen gebildet werden und die Koppelung dieser Elektrodengruppen gegen Erde erfasst wird. Diese jeweilige Koppelung korreliert eng mit dem Abstand des Fingers von der jeweiligen Elektrodengruppe. Aus den jeweiligen Koppelungswerten gegen Erde, oder anhand einer anderweitigen, durch den Finger des Anwenders verursachten und mit dem Fingerabstand korrelierenden Potentialankoppelung kann dann der Abstand von der jeweiligen Elektrodengruppe ermittelt und die Position des Fingers aus den verschiedenen Abstandsinformationen erfasst werden.

Beispielhaft kann die Auswertungsschaltung als ASIC ausgeführt werden und in unmittelbarer Nähe des Scheibenlayers der OLED-Struktur angeordnet sein. Die Anbindung der Auswertungsschaltung an die diskreten Leiterbahnen der Elektrodensegmente kann beispielsweise durch eine flexible Leiterbahn, durch Klemmkontaktstrukturen (z.B. "Zebrastreifen") oder auch durch direkte Anordnung des ASIC's auf dem Scheibenlayer erfolgen. Die auf dem Scheibenlayer angeordneten Elektrodensegmente sind über Leitungsabschnitte mit dem ASIC verbunden. Bereits im Bereich des Scheibenlayers können vertikal und horizontal abfolgende Elektrodensegmente zu Elektrodenzeilen und Elektrodenspalten zusammengefasst sein, wobei diese Spalten und Zeilen gegeneinander isoliert und jeweils für sich als Elektrodensegmentgruppe an den ASIC oder einen Multiplexer angeschlossen sind.

Vorzugsweise sind die Elektrodensegmente als Kreisscheiben, als Rauten, Sechsecke, Achtecke, Mondsichelstrukturen oder eng benachbarte anderweitige Polygone ausgeführt, oder weisen teils ineinandergreifende Geometrien (z.B. sog. Knochen oder Pflastersteinkontur) auf. Bei der Ausführung als entsprechende Segmente, insbesondere Rauten können Rautenketten gebildet werden. Ein Teil der Rauten wird zur Bildung horizontaler Rautenketten verwendet, der weitere Teil der Rauten wird zur Bildung vertikaler Rautenketten verwendet. Zwischen den Elektrodensegmenten verlaufen schmale Trenngassen die einen galvanischen Kontakt der Segmente einer Elektrodensegmentzeile mit den Elektrodensegmenten der kreuzenden Elektrodensegmentspalten verhindern. Die Elektrodensegmente sind also eng aneinander gedrängt ausgebildet, wobei nur die Elektrodesegmente die eine zeilen- oder spaltenartige Kette bilden miteinander leitend verbunden sind.

Der ASIC ist intern vorzugsweise derart aufgebaut, dass dieser die Beschaltung der Elektrodensegmentzeilen und Elektrodensegmentspalten derart einstellt, dass diese sowohl zur Abarbeitung des Touch-Modus als auch zur Abarbeitung des Non-Touch-Modus entsprechend herangezogen werden können. Vorzugsweise ist in dem ASIC eine Einstellmöglichkeit vorgesehen die es ermöglicht, bestimmte Systemeigenschaften der Elektrodengruppen, sowie Übergangsphänomene beim Wechsel zwischen den Arbeitsmodi oder der Änderung des Gruppenaufbaus so zu berücksichtigen, dass diese hinreichend kompensiert werden.

Insbesondere für einhändig zu ergreifende Geräte wie z.B. Mobiltelefone ist es möglich, im Rahmen der Signalverarbeitung eine Kalibrierroutine abzuarbeiten durch welche zunächst eine durch den Geräteaufgriff verursachte Feldbeeinflussung zumindest weitgehend kompensiert wird. Die Gestenerfassung im Non-Touch-Modus kann zunächst eine bestimmte Geste, z.B. eine Bewegung der Fingerspitze entlang einer imaginären Kreisbahn im Uhrzeigersinn erfordern die in einem Abstand von etwa 66% der Displaydiagonalen vor dem Display durchgeführt wird. Mit dieser speziellen Geste kann der Non-TouchDetektionsmodus aktiviert und zudem eine Kalibrierung der Sensorik durchgeführt werden.

Vorzugsweise wird über die Benutzeroberfläche eine mit der erfassten Position korrelierende Anzeige abgewickelt. Das Übergleiten bestimmter Fenster oder Menuepunkte in der grafischen Benutzeroberfläche kann akustisch, und vorzugsweise auch über eine mechanische Feedbackeinrichtung, z.B. elektromagnetisch verlagertes Masseelement haptisch vermittelt werden.

Soweit eine Annäherung des Fingers auch mit einem Aufsetzen auf das OLED- Display verbunden ist, können die in der Non-Touch-Annäherungsphase bestimmten Positionen mit der dann im Touch-Modus erfassten Berührungsposition verglichen werden. Anhand einer implementierten, internen Kalibrierprozedur können anhand der zunächst die Non-Touch-Phase erhobenen Informationen und anhand der im Touch-Modus extrem sicher erhobenen Positionsinformationen die Auswertungsparameter für nachfolgende Detektionsvorgänge adaptiert werden. Gleiches gilt auch für das Abheben des Fingers von der Displayeinrichtung. Hier kann anhand der letzten eindeutig bestimmten Berührungsposition für die Positionsbestimmung im Non-TouchModus eine automatische interne Feinjustierung durch entsprechende Modifikation interner Parameter bewerkstelligt werden.

Insbesondere bei relativ kleinformatigen Touchscreens kann die Positionserfassung so abgewickelt werden, dass bei größerem Fingerabstand von der Displayeinrichtung der Detektionsbereich zur Erfassung der Fingerposition größere Abmessungen hat als die Displayeinrichtung.

Die Verarbeitung der X- und Y- Positionen kann insbesondere in Y-Richtung derart erfolgen, dass hier ein Offset generiert wird, der dazu führt, dass der momentan im Display positionierte Cursor, oder der ausgewählte Menuepunkt nicht vom Finger des Anwenders verdeckt wird. Unter Interface- oder Displayberührung ist im Kontext der vorliegenden Beschreibung ein leichtes Aufsetzen des Fingers auf eine OLED-Scheibenstruktur, insbesondere Displayscheibe zu verstehen. Die in das OLED-Interface eingebundenen Elektrodensysteme werden hierbei nicht, oder zumindest nicht zwingend galvanisch kontaktiert. Der Finger sitzt insoweit auf einem isolierenden Scheiben- oder Film-, oder Folienelement auf. Typischerweise sind sämtliche in dem OLED-Interface vorgesehenen Elektrodensysteme durch eine isolierende transparente Glas- oder Kunststoffschicht abgedeckt. Der Berührungszustand kann anhand diesbezüglich hinreichend indikativer Signalpegel erkannt werden. Der Berührungszustand und der Nicht-Berührungszustand können auch anhand besonderer, mit dem Z-Achsabstand einhergehende Dynamikmerkmale erkannt werden. So ist typischerweise beim Aufsetzen des Fingers die Z-Dynamik nahezu Null, oder repräsentiert die Abflachung der Fingerkuppe unter zunehmendem Aufsetzdruck. Dieses Phänomen kann als Selektionsindikator herangezogen werden. Auch die Z-Dynamik, bzw. bestimmte Z-Dynamikkriterien können im NonTouchmodus als Selektionsindikator herangezogen werden. Ein Z- Dynamikkriterium kann beispielsweise so festgelegt sein, dass dieses bei einem raschen Absenken und wieder Anheben der Fingerkuppe über eine kurze, zum Display etwa senkrechte Strecke erfüllt wird. Dieses Z-Dynamikkriterium beschreibt dann einen "virtuellen Mausklick".

Die Benutzeroberfläche kann je nachdem, ob ein Touch-Mode, oder ein NonTochmode aktiv ist, variieren und hierbei Charakteristika aufweisen die für den jeweiligen Modus besondere Handhabungsvorteile bieten. So kann im Non-TouchModus ggf. eine gröbere grafische Meneuepunktgliederung, oder eine etwas trägere, oder schleppendere Cursordynamik vorgesehen sein, als im Touchmodus.

Auf Grundlage des Konzeptes ist es auch möglich, die jeweils quer und längs verlaufenden Elektrodensegmentketten so anzusteuern, dass durch diese eine Multipunkterkennung, insbesondere eine Erkennung von zwei Fingern ermöglicht wird. Es können hierzu beispielsweise mehrere Zonen generiert werden, die jeweils Werte für Fingerpositionen liefern. Die Aktivierung dieses Multipunktdetektionsmodus kann von der Erfüllung bestimmter Abstandskriterien, oder auch von bestimmten zunächst geforderten Bahnverläufen, d.h. Gesten abhängig sein. Im Rahmen eines Multipunktdetektionsmodus können intuitiv vorteilhaft koordinierbare Interaktionen wie beispielsweise Skalieroperationen, Rotationen von Bildinhalten und Drag and Drop Aktionen koordiniert werden, ohne dass hierbei das Display berührt wird.

Bei eines hinterleuchtete Touchpadkomponente umfasst eine Trägerlage, eine OLED-Struktur und eine Elektrodenschicht, die an die Trägerlage angebunden ist. Die Elektrodenschicht ist in eine Vielzahl von Elektrodensegmenten untergliedert, wobei diese Elektrodensegmente hierbei ein Segmentarray bilden das Segmentzeilen und Segmentspalten umfasst. Die durch die OLED-Struktur erleuchtete Touchpadkomponente umfasst weiterhin eine Auswertungsschaltung die derart ausgebildet ist, dass diese einen Schaltungszustand einnehmen kann, in welchem über die Elektrodensegmente der Elektrodenschicht eine Berührungsdetektion abgewickelt wird. Zudem ermöglich die Auswertungsschaltung die Einnahme eines Schaltungszustandes in welchem eine berührungslose Positions- oder Bewegungserfassung eines Fingers des Anwenders in einem der Touchpadkomponente vorgelagerten Bereich abgewickelt werden kann. Die berührungslose Positionsoder Bewegungserfassung erfolgt unter Zusammenfassung mehrerer Elektrodensegmente des Segmentarrays zu einer zeilen- oder spaltenartigen Elektrodensegmentgruppe. Diese Touchpadkomponente kann konstruktiv wie vorangehend hinsichtlich der Displayeinrichtung beschrieben ausgestaltet werden. Diese Touchpadkomponente kann dazu verwendet werden um Touchpads zu realisieren die zudem auch eine berührungslose Positionserfassung ermöglichen. Derartige Touchpads können an bislang für Touchpads üblichen Einbausteilen z.B. in Notebooks verbaut werden. Die Struktur zur kombinierten Erfassung von Fingerpositionen im Touch-Modus sowie auch im Non-Touchmodus kann auch in anderweitige Gerätschaften, insbesondere Möbel und Fahrzeuginnenausstattungen eingebunden werden um hier in einem räumlich begrenzten Bereich eine entsprechende Eingabezone, d.h. eine Eingabezone die auch Non-Touch Interaktionen ermöglicht, zu realisieren.

Weitere Einzelheiten und Merkmale der Erfindung ergeben sich aus der nachfolgenden Beschreibung in Verbindung mit der Zeichnung. Es zeigt:
Figur 1 eine Schemadarstellung zur Veranschaulichung des mehrschichtigen Aufbaus eines Displays sowie der Lage einer als Feldbereitungselektrode eines Sensorsystems herangezogenen durchgängigen Elektrodenstruktur;
Figur 2 eine Schemadarstellung einer Eingangschaltung des Messsystems (GestIC-Elektronik);
Figur 3 einen typischen zeitlichen Verlauf des Spannungspegels an einer ausgewählten Messelektrode;
Figur 4 einen Graphen zur Veranschaulichung des zeitlichen Verlaufs Spannungspegels an einer ausgewählten Messelektrode bei einer Arbeitsfrequenz von 10 kHz;
Figur 5 einen Graphen ähnlich Figur 4 zur Veranschaulichung eines Auswertungskonzeptes nach welchem die Amplitude jeder Flanke des Generatorsignals (VCOM) einzeln mit zwei Abtastpunkten gemessen wird;
Figur 6 einen Graphen ebenfalls ähnlich Figur 4 zur Veranschaulichung eines weiteren Auswertungskonzeptes nach welchem jeweils nur ein Abtastpunkt gleich nach der Flanke gesetzt wird;
Figur 7 eine Schemadarstellung zur Veranschaulichung des Aufbaus einer unter Einschluss einer OLED-Struktur gebildeten ausgeleuchteten Positionssensoreinrichtung;
Figur 8 eine Schemadarstellung zur Veranschaulichung des Aufbaues einer in Verbindung mit einer OLED-Struktur realisierten, beleuchteten Eingabeeinrichtung mit arrayartig angeordneten Elektrodensegmenten die sowohl zur Berührungsdetektion, als auch zur Fingerpositionserfassung im Non-Touch Modus herangezogen werden;
Figur 9 eine Querschnittdarstellung zur weiteren Veranschaulichung des Aufbaues der beleuchteten Eingabeeinrichtung nach Figur 7;
Figur 10 eine Schemadarstellung zur Veranschaulichung der Bildung von zwei horizontalen und zwei vertikalen Elektrodensegmentgruppen in einem Elektrodensegmentarray die temporär als Feldelektroden zur Erfassung einer Fingerposition herangezogen werden;
Figur 11 eine Skizze zur Veranschaulichung der Ermittlung einer X-Koordinate durch Trilateration der durch die linken und rechten Segmentspalten erfassten Spannungspegel;
Figur 12 ein Flussdiagramm zur Erläuterung einer vereinfachten Variante des Positionsbestimmungsverfahrens.

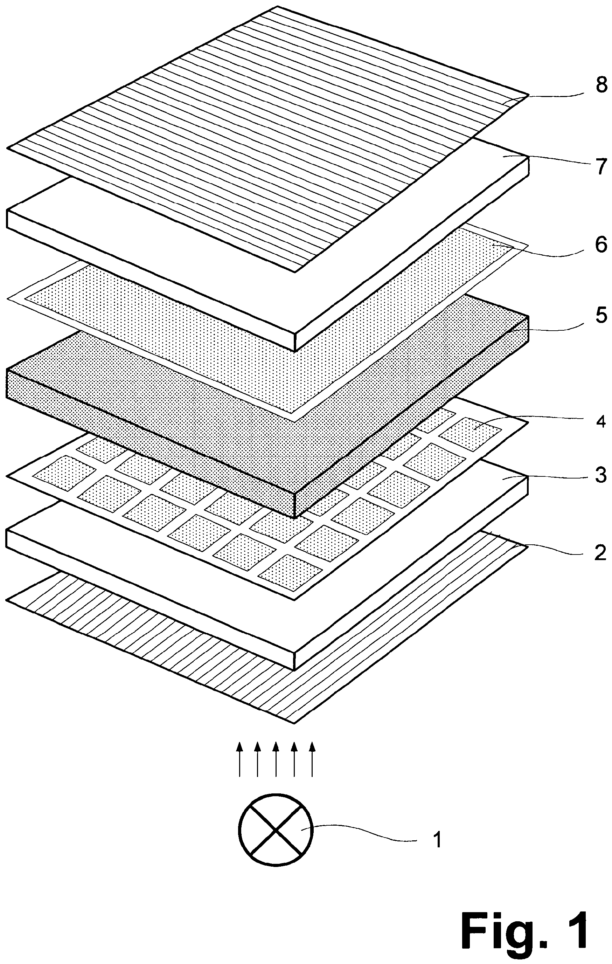

In Figur 1 ist in Form einer perspektivischen Darstellung der Aufbau eines LC- Displays (Liquid Crystal Display) veranschaulicht. Derartige LC-Displays haben einen mehrschichtigen Aufbau. Das von der Beleuchtungsquelle 1 emittierte Licht passiert eine Polarisatorschicht 2. Auf einem darüber liegenden Glassubstrat 3 ist eine Struktur aus leitenden durchsichtigen Elektroden 4 angebracht. Bei einem TFT (Thin-Film Transistor) LC-Display sind auch die Transistoren in diese Schicht integriert. Die einzelnen Elektroden stellen die Pixel des Bildschirmes dar. Bei den Farbdisplays gehören drei Elektroden zu einem Pixel. Die Gegenelektrode 6 für die Flüssigkristall-Füllung 5 liegt in den TFT Displays darüber auf dem zweiten Substrat 7 und ist durchgehend ausgeführt. Diese Elektrode 6 wird als "CommonElektrode" bezeichnet. Ihr elektrisches Potential wird als VCOM bezeichnet. Auf dem Substrat 7 befinden sich bei den Farbdisplays weiterhin Farbfilter. Oben ist eine Analysatorschicht platziert (zweiter Polarisator 8, dar mit seiner Polarisationsachse senkrecht zum erstem Polarisator 2 ausgerichtet ist).

Wenn zwischen den Pixelelektroden 4 und der VCOM-Elektrode 6 eine Spannung anliegt, verändert sich die Polarisation des Lichtes beim Durchgang durch die Flüssigkristallschicht. Damit ist die Leuchtkraft eines Pixels von der Elektrodenspannung abhängt.

Es gibt zwei Varianten der Ansteuerung des TFT Panels: mit VCOM als DC- Spannung und mit VCOM als AC-Spannung. Im zweiten Fall hat VCOM typischerweise eine Rechteckform mit einer Amplitude von ca. 5V und einer Frequenz von ca. 60Hz (bei der Ansteuerung mit "Frame Inversion") bis ca. 50kHz (bei der Ansteuerung mit "Line Inversion"). Gewöhnlich liegt diese Frequenz im Bereich von 5kHz bis 40kHz.

Die Common-Elektrode 6 ist die äußerste elektrisch leitende Schicht des Displays, sie ist kontinuierlich ausgeführt und deckt die ganze Bildschirmoberfläche ab. Erfindungsgemäß wird diese VCOM-Schicht 6 in einem AC-Betriebsmodus betrieben und zumindest teilweise als Generator oder Feldbereitungselektrode verwendet.

Bei diesem Lösungskonzept wird das Display, insbesondere dessen VCOM- Elektrode 6 zum Bestandteil des Gestensensors und fungiert nicht mehr als Störquelle, sondert generiert das Generatorsignal.

Soweit das VCOM-Signal eine relativ niedrige Frequenz aufweist, kann durch eine besondere Abtastlogik dennoch eine relativ hohe Reichweite und Stabilität des Sensorsystems erreicht werden. Hierzu kann wie im folgenden noch näher beschrieben werden wird, vorgegangen werden. Besonders vorteilhaft ist es, wenn die zur Erfassung und Vorauswertung der an den Messelektroden anliegenden Spannungen vorgesehene Sensorschaltung , d.h. die "GestIC-Elektronik" unmittelbar in den Displaycontroller integriert wird.

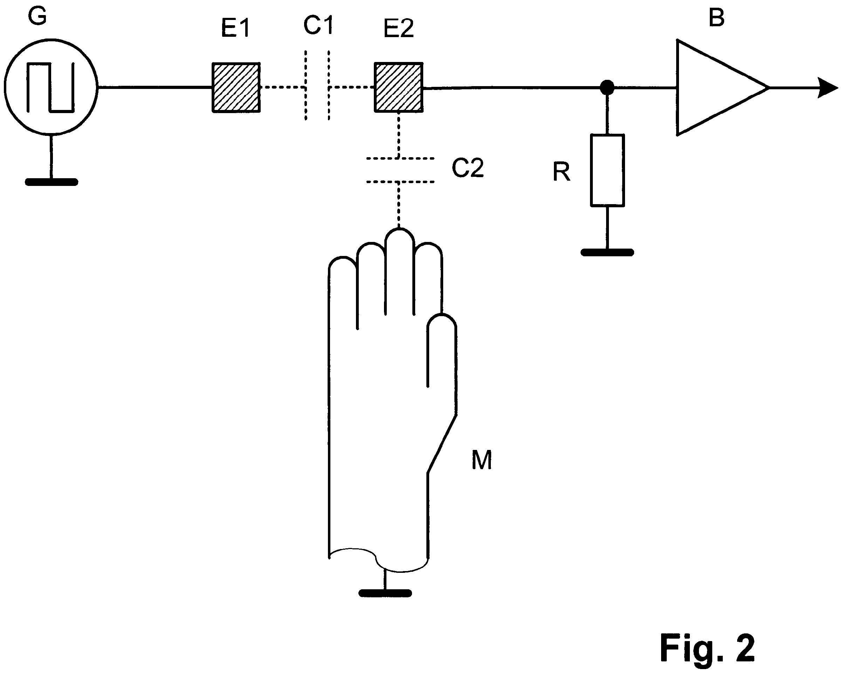

In Figur 2 ist die Eingangsstufe der erfindungsgemäßen Sensorschaltung in ihrem Grundaufbau veranschaulicht. Die hier dargestellte Elektrode E1 wird durch die VCOM-Elektrode (Figur 1 Bezugszeichen 6) des Displays gebildet. An dieser Elektrode E1 liegt das VCOM-Signal an. Durch die Hand M eines Anwenders die sich in einem dem TFT-LC-Display vorgelagerten Bereich befindet erfolgt eine Beeinflussung der an der Messelektrode E2 anliegenden Spannung. Diese Spannung kann durch die hier vereinfacht dargestellte Messschaltung B, R erfasst werden. Diese erfasste Spannung korreliert eng mit der Räumlichen Lage der Hand M gegenüber den beiden Elektroden E1 , E2. Durch den Einsatz mehrerer Messelektroden E2 in der Umgebung der VCOM-Elektrode E1 wird es möglich, die gemessenen Spannungspegel einem Triangulationsansatz zugrunde zu legen und auf diesem Wege die Position der Hand gegenüber den Messelektroden E2 zu errechnen. Die entsprechenden Signale können einer Menue- oder Cursorsteuerung zugrundegelegt werden die vorzugsweise, durch die mittels des Displays wiedergegebenen Bildinhalte grafisch unterstützt wird.

Wie aus Figur 2 weiter ersichtlich, wird die Generatorelektrode E1 mit einer Rechteckspannung vom Generator G betrieben. Die Messelektrode E2 (hier ist nur eine Messelektrode gezeigt) steht in kapazitiver Kopplung zu E1 und zu dem zu erfassenden Objekt M. Die entsprechenden Kapazitäten sind als C1 und C2 bezeichnet. Die Spannung an E2 wird von einem Buffer B mit dem Hochimpedanzeingang (dargestellt als äquivalenter Widerstand R) erfasst und an die weiteren Schaltungsteile geleitet. Die Eingangsschaltung hat hier eine Tiefpasscharakteristik. Die Werte von C1 und C2 bzw. R dürften für Anwendungen in der Praxis etwa 1-10 pF bzw. 10 MOhm betragen.

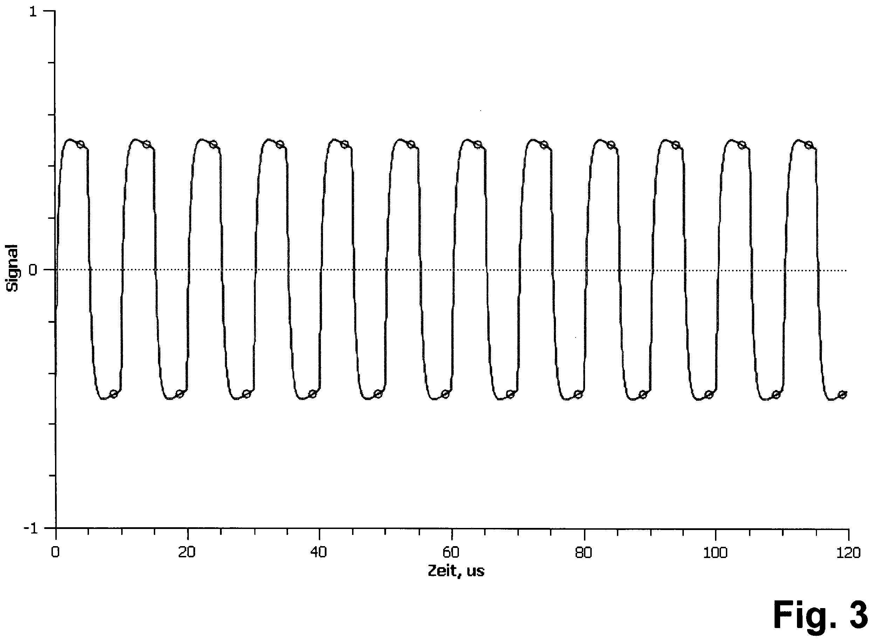

In Figur 3 ist der Spannungsverlauf an einer ausgewählten Messelektrode (Elektrode E2 in Figur 2) für eine Arbeitsfrequenz von 100 kHz dargestellt, die kleinen Kreissymbole auf der Kurve bezeichnen die Abtastpunkte bei der Signalmessung, wie sie in der GestIC-Elektronik realisiert ist. Wie man der Figur 3 entnehmen kann, liegt die Amplitude der Signalspannung am Abtastpunkt niedriger, als gleich nach der Flanke. Das ist durch die erwähnte Tiefpasscharakteristik der Eingansstufe verursacht. Dieser Effekt wird bei niedrigen Arbeitsfrequenzen zunehmend größer.

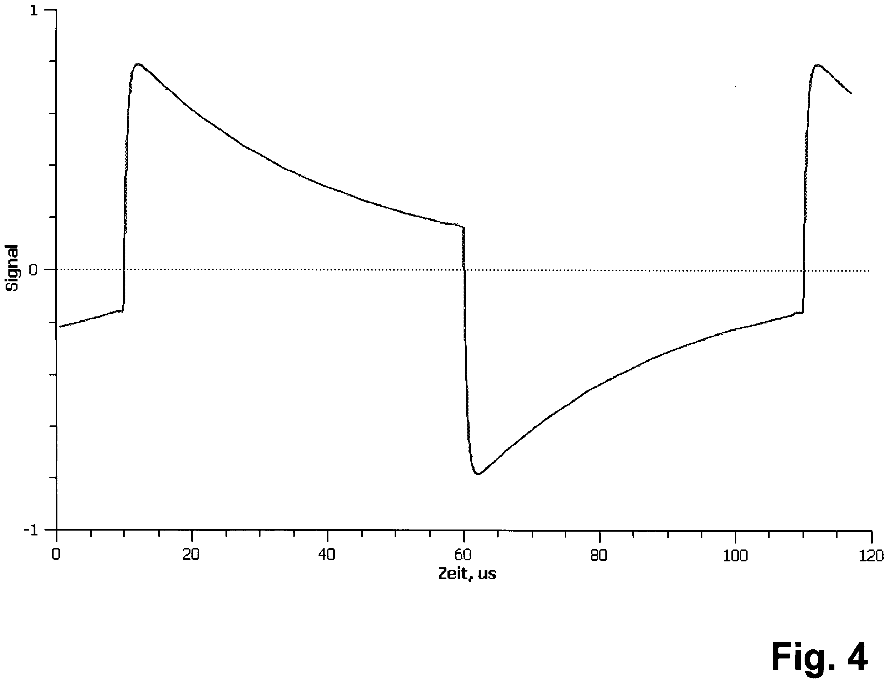

In Figur 4 ist der Signalverlauf für die Arbeitsfrequenz von 10 kHz dargestellt. Um einer Signalabschwächung bei dem Herabsetzen der Arbeitsfrequenz entgegen zu wirken, kann eine alternative Abtastungslogik verwendet werden, die das Vorhandensein höherer Frequenzanteile im Rechtecksignal ausnutzt.

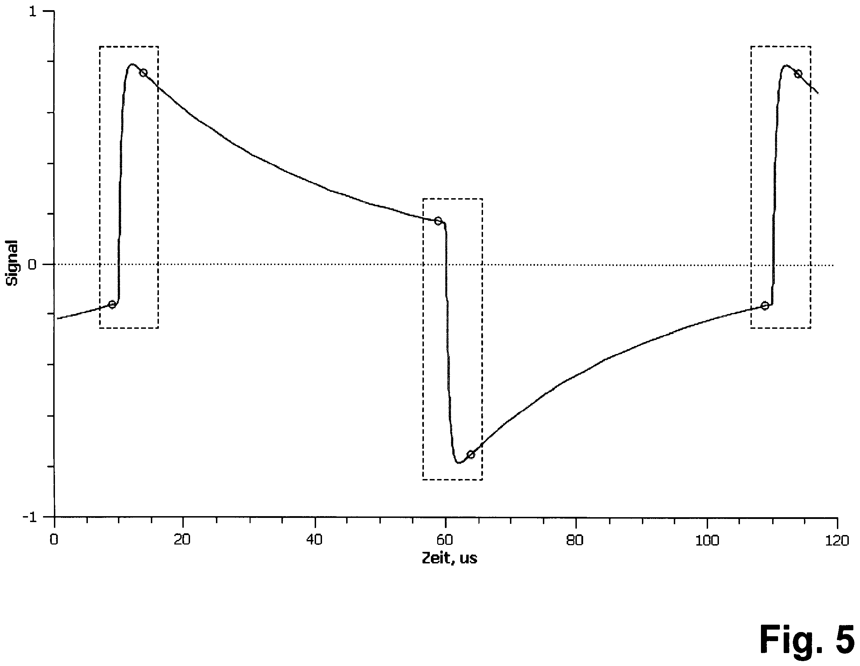

In Figur 5 ist ein Messkonzept veranschaulicht, nach welchem die Signalamplitude an der Messelektrode bei jeder Flanke des Generatorsignals (VCOM) einzeln mit zwei Abtastpunkten gemessen wird.

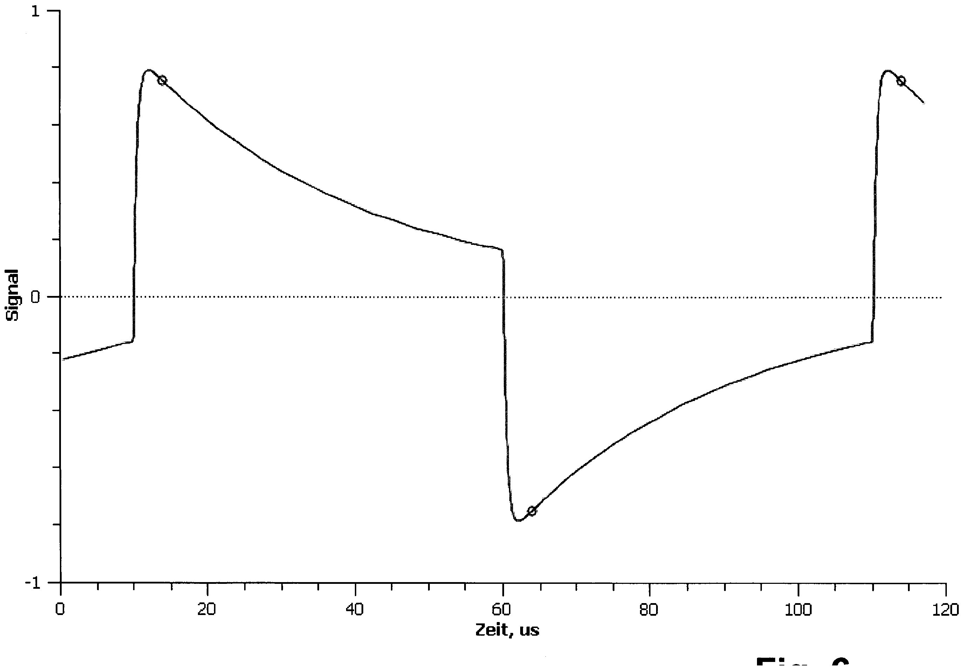

Bei geringeren Anforderungen an die Positionsauflösung des erfindungsgemäßen LC-Displays kann man weiterhin mit nur einem Abtastpunkt pro Flanke arbeiten. Dann wird der Abtastpunkt vorzugsweise gleich nach der Flanke gesetzt wie dies in Figur 6 veranschaulicht ist. Es wird vorausgesetzt, dass die Abtastung nur kurze Zeit in Anspruch nimmt (Größenordnung von 1ps) und die Signalspannung während der Abtastung als quasikonstant angenommen werden kann.

Durch das erfindungsgemäße Konzept ergibt sich neben der Kosteneinsparung durch Entfall einer zusätzlichen Elektrode eine besonders hohe Reichweite ohne Änderungen am Display und seiner Ansteuerung. Weiterhin kann das erfindungsgemäße Konzept ohne zusätzlichen Abschirm-Maßnahmen für das Display realisiert werden und dadurch auch die Helligkeit des Displays nicht beeinträchtigen. Die zur Erfassung und Auswertung der an den Messelektroden anliegenden Spannungen kann in vorteilhafter Weise unmittelbar in einen Displaycontroller integriert werden.

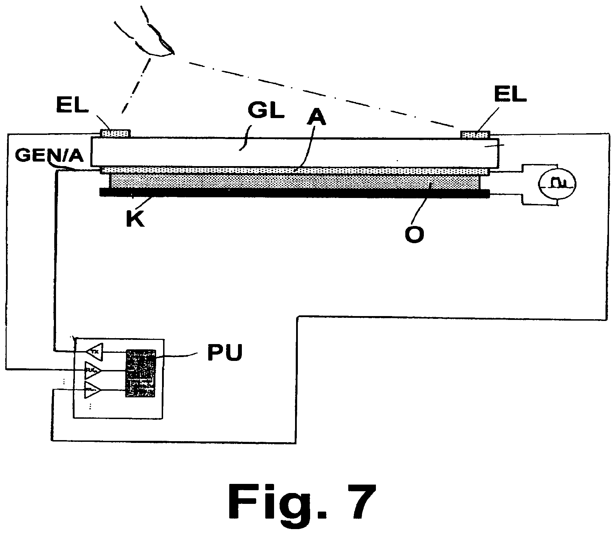

Wie bereits oben erwähnt, sind die nachfolgend beschriebenen OLED Strukturen nicht Bestandteil der vorliegenden Erfindung und dienen lediglich dem besseren Verständnis der Erfindung. Figur 7 zeigt schematisch und stark vereinfacht den Querschnitt eines OLED-Interfaces. Dieses umfasst einen Scheibenlayer GL, eine Anoden-Elektrodenschicht A, eine Kathoden-Elektrodenschicht K, und eine organische Leuchtmittelschichtstruktur O, die zwischen der Anoden-Elektrodenschicht A und der Kathoden-Elektrodenschicht K aufgenommen ist. Das OLED-Interface umfasst weiterhin eine Auswertungsschaltung PU. Die Auswertungsschaltung PU ist derart ausgebildet, dass im Zusammenspiel mit wenigstens der Anoden-Elektrodenschicht A und/oder der Kathodenelektrodenschicht K (hier gezeigt die Variante mit Anodenschicht) ein Sensorsystem realisiert ist, zur Detektion eines Fingers F oder einer Hand eines Anwenders in einem dem Scheibenlayer GL vorgelagerten, Bereich bevor bzw. ohne dass dieser Anwender die OLED-Einrichtung, oder ein diese abdeckendes Scheibenelement berührt.

Durch den gezeigten Aufbau wird es wie eingangs bereits angegeben möglich, in Verbindung mit einer OLED-Struktur ein Anwenderinterface zu realisieren das es ermöglicht, die Bewegung eines Fingers F oder einer Hand eines Anwenders in einem der OLED-Struktur vorgelagerten Bereich anhand elektrostatischer bzw. feldelektrischer Effekte zu erfassen und hierbei Rückgriff auf die Elektroden der OLED-Struktur zu nehmen. Bei dem hier gezeigten Beispiel erfolgt die Spannungsversorgung der OLED-Struktur über einen Rechteckgenerator. Durch Pulsweitenmodulation kann die Leuchtintensität abgestimmt werden. Der Betrieb der OLED-Strukur mit alternierender Gleichspannung ermöglicht eine besonders vorteilhafte Betriebsweise des unter Einschluss der Anodenelektrode A realisierten Positionssensorsystems. So kann beispielsweise für jeden Spannungszyklus, oder für eine ausgewählte Anzahl von Spannungszyklen die Potentialeinkoppelung, kapazitive Koppelung gegen Ground, oder die kapazitive Koppelung gegen das Potential einer der Elektroden A, K der OLED-Struktur erfasst werden. Diese Pegel werden für die jeweilige Sensorelektrode EL ermittelt und zur Errechnung der Position des Fingers herangezogen.

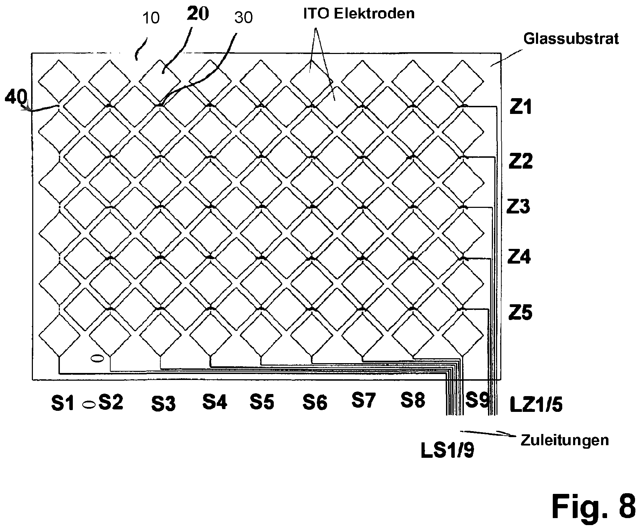

Figur 8 zeigt stark vereinfacht einen speziellen Anwendungsfall der OLED-Interface Technik bei einer Displayeinrichtung. Diese Displayeinrichtung umfasst einen Scheibenlayer 10 der aus einem transparenten und isolierenden Material besteht. Auf diesen Scheibenlayer 10 ist eine transparente Elektrodenschicht aufgebracht, die an den Scheibenlayer 10 angebunden ist. Diese Elektrodenschicht ist in eine Vielzahl von Elektrodensegmenten 20 untergliedert. Die Gemeinschaft aller Elektrodensegmente 20 bildet das hier erkennbare Segmentarray. Dieses Segmentarray bildet Segmentzeilen Z1 , Z2, Z3, Z4 und Z5, sowie Segmentspalten S1 , S2 .... S9 indem die entsprechend horizontal bzw. vertikal abfolgend benachbarten Segmente 20 durch kleine Verbindungsleitungsabschnitte 30, 40 miteinander verbunden sind. Die Segmentzeilen Z1... Z5 und die Segmentspalten S1... S9 sind gegeneinander isoliert und jeweils mit einer diskret über den Scheibenlayer geführten Zuleitung LZ1/5 und LS1/9 versehen. Die Verbindungsleitungsabschnitte 30, 40 sind - sofern diese sich im Bereich des Displays kreuzen, ebenfalls gegeneinander isoliert.

Über diese Zuleitungen LZ 1/5 und LS1/9 sind die Segmentspalten und Segmentzeilen mit einer hier nicht näher gezeigten Auswertungsschaltung verbunden. Diese Auswertungsschaltung ist derart ausgebildet, dass diese einen ersten Schaltungszustand einnehmen kann, in welchem über die Elektrodensegmente der Elektrodenschicht eine Berührungsdetektion abgewickelt wird, und einen zweiten Schaltungszustand einnehmen kann, in welchem die berührungslose Positionserfassung eines Fingers des Anwenders in einem der Displayeinrichtung vorgelagerten Bereich abgewickelt werden kann, wobei die berührungslose Positionserfassung unter Zusammenfassung mehrerer Elektrodensegmente 20 des Segmentarrays zu einer Elektrodengruppe, insbesondere Elektrodenzeile Z1...Z5 oder Elektrodenspalte S1...S9 erfolgt. Die Elektrodensegmente 20 oder die hieraus gebildeten Elektrodesegmentketten entsprechen funktional im wesentlichen den in Figur 7 gezeigten Sensorelektroden EL

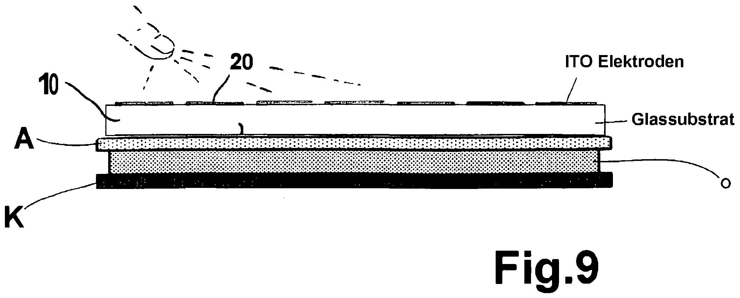

In Figur 9 ist der Aufbau des OLED-Interfaces nach Figur 2 stark vereinfacht dargestellt. Der Scheibenlayer 10 besteht vorzugsweise aus einem Kunststoff-, oder Glasmaterial und hat eine Dicke von beispielsweise 0,8 mm. Auf den Scheibenlayer 10 ist auf beiden Seiten jeweils eine transparente leitfähige Beschichtung (z.B. ITO-Beschichtung) vorgesehen. Eine dieser Schichten fungiert als Elektrode der OLED-Struktur O. Vorzugsweise befindet sich die Anoden-Elektrodenschicht A zwischen dem die Elektrodensegmente 20 umfassenden Elektrodenarray und der Kathodenelektrodenschicht.

Die in Einbau- und Gebrauchsposition einem Anwender zugewandte Oberseite hat eine strukturierte und dabei in eine Vielzahl von Segmenten 20 untergliederte Schicht, die hierbei wie in Figur 8 skizziert in Reihen und Spalten gegliederte, eng benachbarte Segmente, z.B. Rauten aufweist. Die elektrische Kontaktierung der zu Reihen bzw. Spalten gruppierten Elektrodensegmente erfolgt über dezidierte Zuleitungen. Die als Anoden-Elektrode A der OLED-Struktur O fungierende Elektrode ist als durchgehende, transparente ITO-Schicht ausgeführt. Die so aufgebaute Scheibenstruktur bildet ein selbstleuchtendes Scheibenelement das als selbst leuchtendes Touchpad und als Interface für berührungslose Eingabeoperationen fungieren kann. Die Elektrodenschichten sind durch weitere, hier nicht gezeigte isolierend transparente Lagen abgedeckt und damit insbesondere von der Seite des Anwenders her nicht direkt galvanisch kontaktierbar.

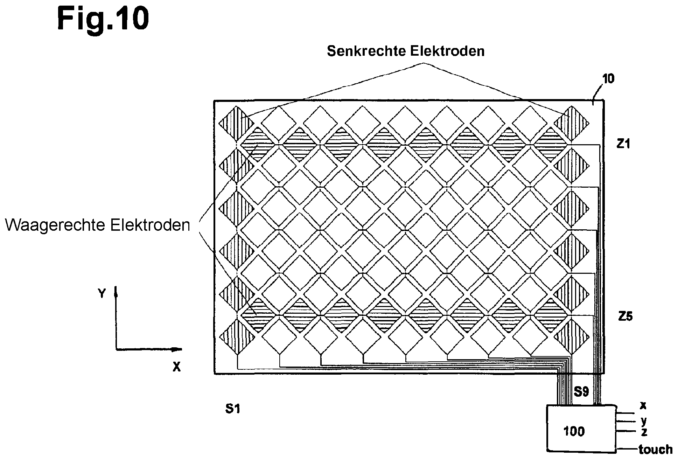

Wie in Figur 10 veranschaulicht, werden nunmehr bei dem hier gezeigten Ausführungsbeispiel in einem entsprechenden Schaltzustand, vier der randnahen Rautenstränge, d.h. die durch horizontalen Verbund von Elektrodensegmenten 2 gebildeten Segmentzeilen Z1 und Z5 sowie die durch vertikalen Verbund der randnahen Elektrodensegmente 20 gebildeten Segmentspalten S1 und S9 auf dem Glas für eine Fingerpositions- oder Fingerbewegungserfassung benutzt. Damit wird unter Nutzung der zu Zeilen und Spalten gruppierten Elektrodensegmente ein "Rahmen" mit Gestenerfassungselektroden aufgebaut.

Die obere horizontale Elektrodensegmentgruppe Z1 und die untere horizontale Elektrodensegmentgruppe Z2, sowie die beiden randnahen linken, bzw. rechten Elektrodensegmentspalten S1 und S9 die im Non-Touch-Modus zur Fingerpositionserfassung herangezogen werden sind hier durch Schraffur hervorgehoben. Die beiden horizontalen Elektrodensegmentgruppen Z1 und Z5 werden zur Erfassung einer Y-Position des Fingers eines Anwenders herangezogen. Simultan zur, oder ggf. auch unmittelbar nach der über diese beiden Elektrodensegmentgruppen Z1 und Z5 bewerkstelligten Detektion der Y-Position kann eine Auswertung erfolgen durch welche über die Elektrodensegmentspalte S1 im linken Randbereich eine linke lang gestreckte Detektionselektrode gebildet wird (linke vertikale Rautenkette) und durch Zusammenschalten der Elektrodensegmente im rechten Randbereich eine rechte Elektrodensegmentspalte S9 (rechte vertikale Rautenkette) gebildet wird. Über diese beiden Elektrodengruppen kann dann die X-Position des angenäherten Fingers ermittelt werden. Weiterhin kann aus den Messsignalen der Abstand des Fingers von dem OLED-Interface ermittelt werden. Zur Bestimmung der X- und Y- Positionen können auch die von den Zeilen und spaltenartigen Elektrodensegmentgruppen erfassten Signalpegel auf Grundlage anderweitiger Auswertungsansätze bestimmt werden. Insbesondere können für die X- und Y- Positionsbestimmung auch zueinander quer verlaufende Elektrodensegmentgruppen herangezogen werden. Zur Bestimmung der X- und Y-Positionen können verschiedene Auswertungsansätze gewichtet kumuliert herangezogen werden.

In einem Gerät das mit einem entsprechenden OLED-Interface ausgestattet ist, kann die Positionierung der Hand oder eines Fingers ab Unterschreiten eines bestimmten Abstands erfasst werden bevor dieser das OLED-Interface berührt. Sobald der Finger des Anwenders auf dem OLED-Interface aufsitzt, wird unter Nutzung der Elektrodensegmente 2 eine an sich bekannte Touchpadfunktion geboten.

Es ist möglich, im Bereich des OLED-Interfaces weitere Elektroden vorzusehen, die beispielsweise nur der Unterstützung der Positionserfassung im "Non-TouchMode" dienen. Durch diese zusätzlichen Elektroden kann beispielsweise die Präsenzerfassung einer Hand bei einem größeren Abstand bewerkstelligt werden. Ein Wechsel in einen Betriebsmodus in welchem die Touch-Analyse Elektroden als Positionserfassungselektroden für berührungslose Positionserfassung verwendet werden erfolgt dann z.B. erst, wenn ein bestimmter Mindestabstand unterschritten ist. Die Durchführung einer Positionserfassung von Fingern bevor diese das OLED-Interface berühren kann unterdrückt werden, sobald eine Berührung des OLED-Interfaces erkannt wurde. Weiterhin kann die Auswertung der Elektrodensegmente im Berührungsmodus unterdrückt werden, solange ein bestimmter Mindestabstand noch nicht unterschritten wird.

Der Fingerpositionserfassungsmodus ohne Kontaktierung Non-Touch oder GestIC-Modus) und der Fingerpositionserfassungsmodus mit Interfaceberührung (Touch-Modus) können durch einen Multiplexer, insbesondere Zeitmultiplexer jeweils angeschaltet werden. Der GestIC-Modus kann die Anwendung eines zur Auswahl der jeweiligen Elektrodengruppe vorgesehenen Group-Drivers beinhalten, wobei durch jenen Group-Driver festgelegt wird, welche Elektrodensegmentgruppe, oder ggf. sogar welche einzelnen Elektrodensegmente momentan zur Erfassung der Fingerposition im Non-Touchmodus herangezogen wird. Der Group-Driver kann die Informationen zur momentanen Elektrodensegmentgruppe an eine Kompensationsschaltung weiterleiten die als solche bestimmte Kennwerte oder Voreinstellungen und Bezugspegelwerte festlegt die bei der Auswertung der über die jeweilige Elektrodensegmentgruppe erfassten feldelektrischen Phänomene Berücksichtigung finden. Diese Kennwerte können insbesondere die Gesamtkapazität oder Normalerdung des momentan aktiven Elektrodensystems in unbeeinflusstem Zustand beschreiben und damit eine bestimmte Vorkalibrierung bewirken. Die Schaltung zur temporären Aktivierung der Elektrodensegmentzeilen und Elektrodensegmentspalten, sowie zur Auswertung der über die aktivierten Elektrodensegmentgruppen detektierten feldelektrischen Umgebungszustände kann in vorteilhafter Weise in einem ASIC 10 implementiert sein, der vorzugsweise in unmittelbarer Nähe des Scheibenlayers 10 angeordnet, insbesondere an den Scheibenlayer 10 angebunden ist. Dieser ASIC 100 ist vorzugsweise derart ausgebildet, dass dieser neben der Erfassung der Fingerposition im Non-TouchModus auch die Auswertung im Touchmodus, d.h. die Touchscreenfunktionalität bietet. Dieser ASIC 100 ist vorzugsweise so ausgelegt, dass bestimmte Funktionen desselben durch Programmierung festgelegt werden können. Der ASIC kann so gestaltet sein, dass durch diesen festgelegt wird, welche Elektrodensegmentgruppen, insbesondere welche Elektrodensegmentzeilen Z1...Z5 und Elektrodensegmentspalten S1...S9 des Elektrodensegmentarrays für die Positionserfassung im Non-Touchmodus momentan herangezogen werden.

Der ASIC 10 selbst liefert die Signale bezüglich der X- und Y- Position sowie des Touchzustandes in der Art verbreiteter Touchscreen-Schaltungen. Zusätzlich liefert der ASIC 100 auch die Z-Position bzw. Signale die Rückschlüsse auf den Abstand des Fingers eines Anwenders von dem Display geben bevor dieses berührt wird. Im ASIC kann ein Hintergrundprogramm abgearbeitet werden dass eine bestimmte Vorauswertung der erfassten Positions- oder Bewegungsinformationen vornimmt. So können durch den ASIC insbesondere auch "Mausklick-Informationen" generiert werden. Der ASIC 100 nutzt die zur X- und Y- Positionserfassung im Touch-Modus vorgesehenen Elektrodensegmente 2 und wählt aus diesen phasenweise Elektrodensegmentgruppen Z1...Z5 und S1...S9. Diese Elektrodensegmentgruppen Z1...Z5 und S1...S9 werden an ein Auswertungssystem angebunden. Durch dieses Auswertungssystem kann der Abstand, d.h. die Z-Position des Fingers, oder der Hand eines Anwenders vom OLED-Interface erfasst werden. Die Erfassung beruht hierbei auf einer Änderung der kapazitiven Koppelung gegen Erde (Ground), der Einkoppelung eines Potentiales, und/oder der Änderung der dielektrischen Eigenschaften der Umgebung der Elektrodengruppen infolge des Eindringens und Positionierens des Fingers oder der Hand in einem dem OLED-Interface vorgelagerten Bereich. Die Beeinflussung der dielektrischen Eigenschaften der Umgebung der Elektrodensegmentgruppen Z1...Z5 und S1...S9 durch den Anwender kann über die temporär als Sensorelektroden betriebenen Elektrodengruppen durch verschiedene Messansätze erfasst werden. Ein typischer Messansatz besteht darin, dass beispielsweise die durch den Finger des Anwenders beeinflusste Koppelung der aktivierten Elektrodensegmentgruppe gegen Ground als analoger, d.h. innerhalb eines Bereiches variierender Pegel erfasst wird.

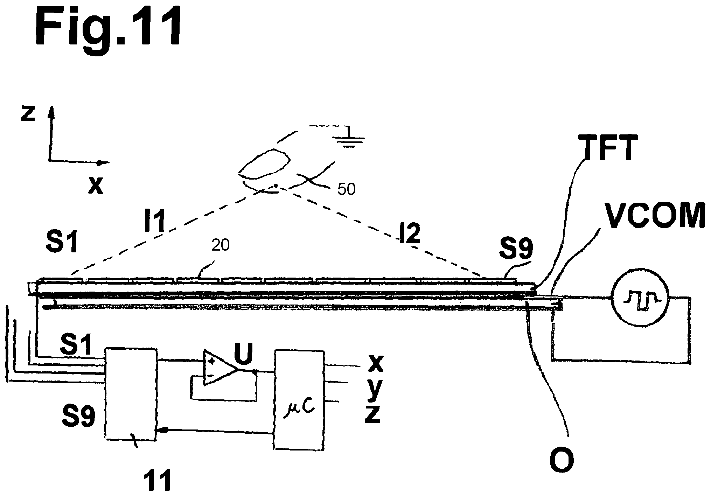

In Figur 11 ist in Form einer Skizze ein OLED-Interface und die hiermit abgewickelte Erfassung der Position eines Fingers eines Anwenders weiter veranschaulicht. Über die randnahen und zu Segmentspalten S1 und S9 zusammengefassten Elektrodensegmente 2 werden Signalpegel erfasst, die indikativ sind für die Abstände 11 , 12 der Fingerkuppe 50 des Anwenders von dem OLED-Interface. Aus diesen Signalpegeln wird dann die X-Position und der Z- Abstand errechnet. Die Pegelerfassung erfolgt über einen Groupdriver der sukzessive bestimmte Elektrodensegmentgruppen der Displayeinrichtung mit einer Auswertungsschaltung verbindet. Hier wird über den vereinfacht dargestellten Verstärker der Spannungspegel an der Elektrodengruppe hochohmig erfasst und dem µC zugeführt. Dieser umfasst einen ADC und errechnet aus den so gewonnenen digitalen Pegelinformationen die X-, Y- und Z-Koordinaten der Fingerkuppe 4. Die Elektrodensegmente 20 sitzen auf einem Scheibenlayer der Teil einer TFT-Displaystruktur bildet. Die TFT-Displaystruktur umfasst eine VCOM- Elektrode (VCOM) die unmittelbar als Anodenelektrode, oder ggf. auch als Kathode der OLED-Struktur O fungiert. Die OLED-Struktur O, die TFT-Strukur TFT und das obere Sensorelektrodenarray haben einen Schichtaufbau. Die OLED- Struktur O und die TFT-Struktur TFT teilen sich eine transparente Elektrodenschicht als VCOM Elektrode bzw. als Anodenelektrode der OLED- Struktur. Die TFT-Struktur kann auch als einfache LCD-Struktur ausgeführt sein.

An den Elektroden der OLED-Struktur O liegt eine hier vereinfacht als Rechteckspannung beschriebene alternierende Spannung ohne Potentialumkehr an. Die Schaltungsanordnung umfasst RX und TX Anschlüsse. Es ist möglich, z.B. durch entsprechenden Kanalmultiplex eine Vielzahl von Elektrodensegmentketten zur berührungslosen Positionsbestimmung heranzuziehen. Die Auswertung der an den jeweiligen Elektrodensegmentketten im Non-Touch-Modus anliegenden Signalpegel kann so abgewickelt werden, dass eine Multiobjekterkennung, d.h. z.B. die Erkennung von zwei Fingerspitzen und eine entsprechende Positionserkennung erfolgt.

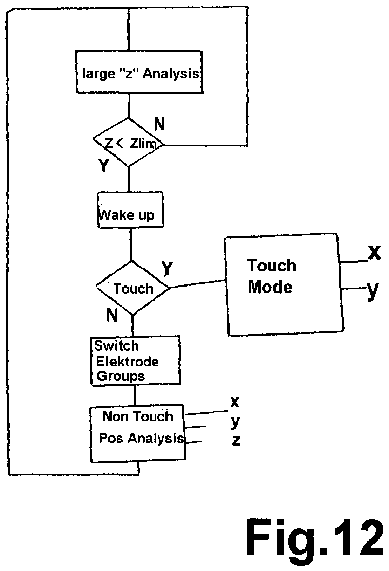

In Figur 12 ist ein vereinfachtes Flussdiagramm dargestellt. Wie hieraus ersichtlich, wird zunächst geprüft, ob ein bestimmter Mindestabstand von der OLED-Struktur unterschritten wird. Trifft dies zu, so wird das System aus einem einfachen Energiesparbetriebsmodus in einen Hauptbetriebszustand umgeschaltet. Wird ein Touchzustand festgestellt, so wird über das Elektrodensegmentarray eine Erfassung der Berührungsposition abgewickelt. Dieser Touch-Modus wird solange beibehalten, bis die Berührung beendet wird. Sobald der Finger des Anwenders vom OLED-Interface abhebt, wird überprüft, ob noch ein bestimmter Abstandsschwellwert von z.B. 66 % Interfaceflächendiagonale nicht überschritten wird. Wird dieser Abstandsschwellwert nicht überschritten arbeitet das Detektionssystem im NonTouch-Modus in welchem sukzessive aktivierte Elektrodensegmentzeilen Z1... Z5 und Elektrodensegmentspalten S1... S9, oder nur die randnahen Elektrodensegmentgruppen, d.h. die Elektrodensegmentzeilen Z1 und Z5, sowie die Elektrodensegmentspalten S1 und S9 des Elektrodensegmentarrays hinsichtlich ihrer kapazitiven Koppelung gegen Ground untersucht werden. Aus den von der momentanen Fingerposition abhängigen Analogwerten können die X, Y und Z-Positionen des Fingers errechnet werden.

Die Technik kann in vorteilhafter Weise als OLED- Scheibenelement realisiert werden, das mit Touchscreen-Elektroden ausgestattet ist, wobei diese Touchscreen-Elektroden an eine Auswertungsschaltung angebunden sind. Dieses Scheibenelement kann dann in ein Display eingebunden werden. Die Elektroden des Scheibenelementes sind vorzugsweise auf der dem Anwender zugewandten Seite nochmals von einer isolierenden transparenten Decklage abgedeckt, so dass auch im Touch-Modus keine galvanische Kontaktierung der Elektrodensegmente erfolgt.

Die Technik eignet sich insbesondere für mobile Kommunikationsgeräte wie Mobiltelefone, e-books und Tablet-PC's.

Die Elektrodensegmente des Elektrodenarrays können in eine mehrschichtige transparente Scheibenstruktur eingebunden sein. Um eine besonders zuverlässige Isolierung der sich kreuzenden Überbrückungspunkte zwischen den einzelnen Elektrodensegmenten zu erreichen, können die Elektrodensegmente die jeweils Elektrodensegmentzeilen bilden auf einer ersten Seite eines transparenten und isolierenden Layers angeordnet sein und diejenigen Elektrodensegmente die zu Elektrodensegmentspalten verbunden sind also quer zu den Zeilen verlaufen - auf einer abgewandten Seite dieses Layers, oder auch auf einem weiteren Layer angeordnet sein. Weiterhin kann auf der dem Anwender später abgewandten Seite dieser Sandwichstruktur eine im wesentlichen vollflächige Rückabschirmungslage ausgebildet sein. Diese Rückabschirmungslage kann insbesondere auch durch die sog. VCOM-Lage einer Flüssigkristallstruktur gebildet sein. Diese wiederum fungiert vorzugsweise als Elektrode der OLED- Struktur.

Eine Ausführungsform richtet sich primär auf ein OLED-Interface das sowohl Touchscreenfunktionalitäten, als auch Non-Touch-Positionsanalyse Funktionalitäten bietet, wobei diese Funktionalitäten durch gemeinsam genutzte Elektrodensegmente realisiert werden. Das Konzept ist auch auf Flachstrukturen übertragbar die nicht unmittelbar ein Display bedecken. Diese Flachstrukturen können dazu verwendet werden um zumindest temporär beleuchtete Touchpads zu realisieren die zudem auch eine berührungslose Positionserfassung ermöglichen. Derartige Touchpads können an bislang für Touchpads üblichen Einbaustellen z.B. in Notebooks verbaut werden. Die Struktur zur kombinierten Erfassung von Fingerpositionen im Touch-Modus sowie auch im Non-Touchmodus kann auch in anderweitige Gerätschaften, insbesondere Möbel und Fahrzeuginnenausstattungen eingebunden werden um hier in einem räumlich begrenzten Bereich eine entsprechende, temporär beleuchtete Eingabezone, d.h. eine Eingabezone die auch Non-Touch Interaktionen ermöglicht, zu realisieren.

## Patentansprüche

1. TFT-Flüssigkristalldisplay (LC-Display) mit einem mehrschichtigen Aufbau, umfassend:
- ein erstes Glassubstrat (3), darüber
- eine erste Elektrodenstruktur (4), die eine Vielzahl von Pixelelektroden umfasst, und auf das erste Glassubstrat (3) aufgebracht ist,
- eine Flüssigkristallfüllung (5), die über der ersten Elektrodenstruktur (4) angeordnet ist,
- ein über der Flüssigkristallfüllung angeordneten zweites zweites Substrat (7), auf dessen Unterseite eine zweite Elektrodenstruktur (6) angeordnet ist, die als großflächige Elektrode (VCOM) ausgeführt ist, und als Gegenelektrode zu der Vielzahl der Pixelelektroden fungiert, wobei zum Betrieb des TFT-LC-Displays die zweite Elektrodenstruktur (6) mit einer Rechteckspannung beaufschlagt wird,
- eine erste und zweite Polarisatorschicht (2, 8), die jeweils an gegenüberliegenden Seiten des mehrschichtigen Aufbaus angeordnet sind, deren Polarisationsachsen senkrecht zueinander ausgerichtet sind, und
eine unterhalb des mehrschichtigen Aufbaus angeordnete Lichtquelle (1);
**dadurch gekennzeichnet, dass**
das TFT-LC-Display mit einer Sensoreinrichtung zur berührungslosen Detektion des Fingers oder der Hand eines Anwenders in einem dem TFT-LC-Display vorgelagerten Bereich ausgestattet ist,
wobei die Sensoreinrichtung mehrere als Messelektroden fungierende Randelektroden umfasst, die in einem der zweiten Elektrodenstruktur (6) benachbarten Randbereich angeordnet sind,
- wobei die zweite Elektrodenstruktur (6) als Feldbereitungselektrode dieser Sensoreinrichtung fungiert und das mittels dieser Feldbereitungselektrode generierte elektrische Feld von den Messelektroden (E2) der Sensoreinrichtung als Spannungspegel gemessen werden, die durch die räumliche Position des Fingers oder der Hand beeinflusst werden,
wobei eine Positionsbestimmung aus abgegriffenen Signalen der Messelektroden (E2) durch Triangulation bestimmt wird.

2. TFT-LC-Display nach Anspruch 1, wobei die Displayeinrichtung als Rechteckdisplay ausgebildet ist, und die mehreren Randelektroden (EL) sich im Rand- und/oder Eckbereich des Rechteckdisplays befinden.

3. TFT-LC-Display nach Anspruch 1, wobei die Frequenz der Rechteckspannung im Bereich von 50 Hz bis 80 kHz liegt.

4. TFT-LC-Display nach einem der vorhergehenden Ansprüche, wobei die Signalamplitude einer Messelektrode bei jeder Flanke des Generatorsignals mit zwei Abtastpunkten gemessen wird, wobei ein Abtastpunkt vor einer jeweiligen Flanke und ein Abtastpunkt nach der jeweiligen Flanke liegt.

5. TFT-LC-Display nach einem der vorhergehenden Ansprüche 1-3, wobei die Signalamplitude einer Messelektrode bei jeder Flanke des Generatorsignals mit einem Abtastpunkt gemessen wird, wobei der Abtastpunkt nach einer jeweiligen Flanke liegt.

6. Verfahren zum Betreiben eines TFT-LC-Display gemäß einem der vorhergehenden Ansprüche 1-5 zur berührungslosen Detektion der räumlichen Position des Fingers oder der Hand eines Anwenders in einem Detektionsbereich, welcher ein dem TFT-LC-Display vorgelagerter Bereich ist, mit den Schritten:
- Beaufschlagen der zweiten Elektrodenstruktur (6) des TFT-LC-Displays mit einer Rechteckspannung, wobei die zweite Elektrodenstruktur (6) als Feldbereitungselektrode fungiert und das mittels dieser Feldbereitungselektrode generierte elektrische Feld von den Messelektroden (E2) als Spannungspegel gemessen werden, die durch die räumliche Position des Fingers oder der Hand beeinflusst werden,
- Bestimmung der Position des Fingers oder der Hand aus abgegriffenen Signalen der Messelektroden (E2) durch Triangulation.

7. Verfahren nach Anspruch 6, wobei die an der flächigen Elektrode (VCOM) anliegende Spannung im Bereich von 5V liegt und eine Frequenz im Bereich von 5kHz bis 40kHz aufweist.

8. Verfahren nach einem der Ansprüche 6 oder 7, wobei die Signalamplitude einer Messelektrode (EL, E2) bei jeder Flanke des Generatorsignals mit zwei Abtastpunkten gemessen wird, wobei ein Abtastpunkt vor einer jeweiligen Flanke und ein Abtastpunkt nach der jeweiligen Flanke liegt.

9. Verfahren nach einem der Ansprüche 6 oder 7, wobei die Signalamplitude einer Messelektrode (EL, E2) bei jeder Flanke des Generatorsignals mit einem Abtastpunkt gemessen wird, wobei der Abtastpunkt nach einer jeweiligen Flanke liegt.

## Claims

1. A TFT liquid crystal display (LC display) with a multi-layer structure, comprising:
- a first glass substrate (3), above
- a first electrode structure (4) comprising a plurality of pixel electrodes and applied to the first glass substrate (3),
- a liquid crystal filling (5), which is arranged over the first electrode structure (4),
- a second second substrate (7) arranged over the liquid crystal filling, on the underside of which a second electrode structure (6) is arranged, which is formed as a large-area electrode (VCOM) and acts as a counter-electrode for the plurality of pixel electrodes, wherein for operating the TFT-LC display a square-wave voltage is applied to the second electrode structure (6),
- a first and second polarizer layer (2, 8), each arranged on opposite sides of the multilayer structure, the polarization axes of which are oriented perpendicularly to one another, and
a light source (1) arranged below the multi-layer structure;
**characterized in that**
the TFT LC display is equipped with a sensor device for contactless detection of a user's finger or hand in a region disposed in front of the TFT LC display,
wherein the sensor device comprises a plurality of edge electrodes which function as measurement electrodes and which are arranged in an edge region adjacent to the second electrode structure (6),
- wherein the second electrode structure (6) acts as a field preparation electrode of this sensor device and the electrical field generated by means of this field preparation electrode is measured by the measurement electrodes (E2) of the sensor device as voltage levels, which are influenced by the spatial position of the finger or the hand,
wherein a position determination from signals tapped by the measurement electrodes (E2) is determined by triangulation.

2. The TFT-LC display according to claim 1, wherein the display device is formed as a rectangular display, and the plurality of edge electrodes (EL) are located in the edge and/or corner region of the rectangular display.

3. The TFT LC display according to claim 1, wherein the frequency of the square-wave voltage is in the range of 50 Hz to 80 kHz.

4. The TFT-LC display according to one of the preceding claims, wherein the signal amplitude of a measurement electrode is measured using two sampling points for each edge of the generator signal, wherein one sampling point is located before a respective edge and one sampling point is located after the respective edge.

5. The TFT LC display according to one of the preceding claims 1-3, wherein the signal amplitude of a measurement electrode is measured using one sampling point for each edge of the generator signal, the sampling point being located after a respective edge.

6. A method for operating a TFT-LC display according to one of the preceding claims 1-5 for contactless detection of the spatial position of the finger or the hand of a user in a detection area, which is a region disposed in front of the TFT-LC display, comprising the steps:
- applying a square-wave voltage to the second electrode structure (6) of the TFT LC display, with the second electrode structure (6) acting as a field preparation electrode and the electric field generated by means of this field preparation electrode being measured by the measurement electrodes (E2) as voltage levels, which are influenced by spatial position of the finger or hand,
- determining the position of the finger or hand from signals picked up by the measurement electrodes (E2) by triangulation.

7. The method according to claim 6, wherein the voltage applied to the flat electrode (VCOM) is in the range of 5V and has a frequency in the range from 5 kHz to 40 kHz.

8. The method according to one of claims 6 or 7, wherein the signal amplitude of a measurement electrode (EL, E2) is measured using two sampling points for each edge of the generator signal, wherein one sampling point is located before a respective edge and one sampling point is located after the respective edge.

9. The method according to any one of claims 6 or 7, wherein the signal amplitude of a measurement electrode (EL, E2) is measured using one sampling point for each edge of the generator signal, wherein the sampling point is located after a respective edge.

## Revendications

1. Écran à cristaux liquides (LCD) TFT avec une structure multicouche, comprenant :
- un premier substrat en verre (3), au-dessus de celui-ci
- une première structure d'électrodes (4), qui comprend une pluralité d'électrodes de pixels, et est appliquée sur le premier substrat en verre (3),
- un remplissage de cristaux liquides (5), qui est disposé au-dessus de la première structure d'électrodes (4),
- un deuxième substrat (7) disposé au-dessus du remplissage de cristaux liquides, sur la face inférieure duquel est disposée une deuxième structure d'électrodes (6), qui est conçue sous forme d'électrode de grande surface (VCOM) et fait office de contre-électrode par rapport à la pluralité d'électrodes de pixels, dans lequel la deuxième structure d'électrodes (6) est alimentée avec une tension rectangulaire pour le fonctionnement de l'écran TFT-LC,
- une première et deuxième couche polarisante (2, 8), qui sont disposées respectivement sur des faces opposées de la structure multicouche, dont les axes de polarisation sont orientés perpendiculairement l'un à l'autre, et
une source lumineuse (1) disposée sous la structure multicouche ;
**caractérisé en ce que**
l'écran TFT-LC est équipé d'un dispositif capteur pour la détection sans contact du doigt ou de la main d'un utilisateur dans une zone située en amont de l'écran TFT-LC,
dans lequel le dispositif capteur comprend plusieurs électrodes de bord faisant office d'électrodes de mesure, qui sont disposées dans une zone de bord voisine de la deuxième structure d'électrodes (6),
- dans lequel la deuxième structure d'électrodes (6) ffait office d'électrode de préparation de champ de ce dispositif capteur et le champ électrique généré au moyen de cette électrode de préparation de champ est mesuré par les électrodes de mesure (E2) du dispositif de capteur sous forme de niveaux de tension qui sont influencés par la position spatiale du doigt ou de la main,
dans lequel une détermination de position est déterminée par triangulation à partir de signaux prélevés des électrodes de mesure (E2).

2. Ecran TFT-LC selon la revendication 1, dans lequel le dispositif d'affichage est réalisé comme un écran rectangulaire, et les plusieurs électrodes de bord (EL) se trouvent dans la zone de bord et/ou de coin de l'écran rectangulaire.

3. Ecran TFT-LC selon la revendication 1, dans lequel la fréquence de la tension rectangulaire se situe dans la plage de 50 Hz à 80 kHz.

4. Ecran TFT-LC selon l'une quelconque des revendications précédentes, dans lequel l'amplitude de signal d'une électrode de mesure est mesurée à chaque flanc du signal du générateur avec deux points d'échantillonnage, dans lequel un point d'échantillonnage se situe avant un flanc respectif et un point d'échantillonnage après le flanc respectif.

5. Ecran TFT-LC selon l'une quelconque des revendications précédentes 1-3, dans lequel l'amplitude de signal d'une électrode de mesure est mesurée à chaque flanc du signal de générateur avec un point d'échantillonnage, dans lequel le point d'échantillonnage se situe après un flanc respectif.

6. Procédé de fonctionnement d'un écran TFT-LC selon l'une quelconque des revendications précédentes 1-5 pour la détection sans contact de la position spatiale du doigt ou de la main d'un utilisateur dans une zone de détection, laquelle est une zone située en amont de l'écran TFT-LC, avec les étapes :
- de sollicitation de la deuxième structure d'électrodes (6) de l'écran TFT-LC avec une tension rectangulaire, dans lequel la deuxième structure d'électrodes (6) fait office d'électrode de préparation de champ et le champ électrique généré au moyen de cette électrode de préparation de champ est mesuré par les électrodes de mesure (E2) sous forme de niveaux de tension, qui sont influencés par la position spatiale du doigt ou de la main,
- de détermination de la position du doigt ou de la main par triangulation à partir de signaux prélevés des électrodes de mesure (E2).

7. Procédé selon la revendication 6, dans lequel la tension appliquée à l'électrode plane (VCOM) se situe dans la plage de 5 V et présente une fréquence dans la plage de 5 kHz à 40 kHz.

8. Procédé selon l'une quelconque des revendications 6 ou 7, dans lequel l'amplitude de signal d'une électrode de mesure (EL, E2) est mesurée à chaque flanc du signal du générateur avec deux points d'échantillonnage, dans lequel un point d'échantillonnage se situe avant un flanc respectif et un point d'échantillonnage après le front respectif.

9. Procédé selon l'une quelconque des revendications 6 ou 7, dans lequel l'amplitude de signal d'une électrode de mesure (EL, E2) est mesurée à chaque flanc du signal du générateur avec un point d'échantillonnage, dans lequel le point d'échantillonnage se situe après un front respectif.
